# EUROPEAN PATENT APPLICATION

(11) **EP 4 712 608 A1**
(43) Date of publication of application: **18.03.2026**
(21) Application number: 23936898.8
(22) Date of filing: 12.05.2023
(51) Int. Cl.: H04W 64/00

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/094087
(87) International publication number: WO 2024/234208

(57) **Abstract**

Provided in the embodiments of the present disclosure are an information processing method and apparatus, and a communication device and a storage medium. The information processing method, which is executed by means of a sending end, comprises: sending a sidelink positioning protocol (SLPP) message, wherein the SLPP message comprises a transaction identifier (ID) of a first transaction, and the transaction ID is used for determining an initiator of the first transaction.

## Description

### FIELD

The present disclosure relates to, but is not limited to, the field of wireless communication technology, and in particular relates to an information processing method and apparatus, a communication device, and a storage medium.

### BACKGROUND

In a communication system, positioning based on a sidelink (SL) between user equipments (UEs) includes absolute positioning, relative positioning, and ranging.

The ranging usually only involves two UEs, that is, ranging is performed between two UEs, but absolute positioning and relative positioning may involve a plurality of UEs to participate in positioning to improve the accuracy of absolute positioning and relative positioning.

### SUMMARY

Embodiments of the present disclosure provide an information processing method and apparatus, a communication device, and a storage medium.

According to a first aspect of embodiments of the present disclosure, there is provided an information processing method, which is performed by a transmitting end and includes:
transmitting a sidelink positioning protocol or a sidelink LTE positioning protocol (SLPP) message, in which the SLPP message includes a transaction identification (ID) of a first transaction, and the transaction ID is used to determine an initiator of the first transaction.

According to a second aspect of embodiments of the present disclosure, there is provided an information processing method, which is performed by a receiving end and includes:
receiving an SLPP message, in which the SLPP message includes a transaction identification (ID) of a first transaction, and the transaction ID is used to determine an initiator of the first transaction.

According to a third aspect of embodiments of the present disclosure, there is provided an information processing apparatus, which includes:
a transmitting module configured to transmit an SLPP message, in which the SLPP message includes a transaction ID of a first transaction, and the transaction ID is used to determine an initiator of the first transaction.

According to a fourth aspect of embodiments of the present disclosure, there is provided an information processing apparatus, which includes:
a receiving module configured to receive an SLPP message, in which the SLPP message includes a transaction ID of a first transaction, and the transaction ID is used to determine an initiator of the first transaction.

According to a fifth aspect of embodiments of the present disclosure, there is provided a communication device, which includes: a processor, a transceiver, a memory and an executable program stored in the memory and executable by the processor, in which the processor executes the executable program to perform the information processing method according to the first aspect or the second aspect.

According to a sixth aspect of embodiments of the present disclosure, there is provided a communication system, which includes:
a transmitting end configured to perform the information processing method provided by the first aspect; and
a receiving end configured to perform the information processing method provided by the second aspect.

According to a seventh aspect of embodiments of the present disclosure, there is provided a computer storage medium storing an executable program that when executed by a processor, causes the information processing method according to the first aspect or the second aspect to be implemented.

In the technical solution provided by embodiments of the present disclosure, by transmitting an SLPP message, the SLPP message includes a transaction ID of a first transaction, and the transaction ID is used to determine an initiator of the first transaction, so that the initiator of the transaction may be determined by using the transaction ID included in the SLPP message, reducing a situation in which a plurality of participants cannot distinguish the initiator of the transaction when participating in the same transaction or the initiators determined by different participants in the same transaction are different, and improving the accuracy of information interaction in the transaction process. Since the initiator of the transaction may be more accurately distinguished according to the transaction ID, the accuracy of positioning may be improved by using the SLPP message carrying the transaction ID for positioning.

It should be understood that the forgoing general description and the following detailed description are only illustrative and explanatory, and cannot limit embodiments of the present disclosure.

### BRIEF DESCRIPTION OF THE DRAWINGS

The accompanying drawings herein are incorporated into the specification and constitute a part of the specification. The accompanying drawings illustrate embodiments conform to the present disclosure and are used to explain the principles of embodiments of the present disclosure together with the specification.
FIG. 1 is a schematic diagram of a wireless communication system illustrated according to an illustrative embodiment.
FIG. 2 is a schematic diagram of a positioning framework illustrated according to an illustrative embodiment.
FIG. 3 is a flow chart of an information processing method illustrated according to an illustrative embodiment.
FIG. 4 is a flow chart of an information processing method illustrated according to an illustrative embodiment.
FIG. 5 is a flow chart of an information processing method illustrated according to an illustrative embodiment.
FIG. 6 is a flow chart of an information processing method illustrated according to an illustrative embodiment.
FIG. 7 is a flow chart of an information processing method illustrated according to an illustrative embodiment.
FIG. 8 is a flow chart of an information processing method illustrated according to an illustrative embodiment.
FIG. 9 is a flow chart of an information processing method illustrated according to an illustrative embodiment.
FIG. 10 is a flow chart of an information processing method illustrated according to an illustrative embodiment.
FIG. 11 is a flow chart of an information processing method illustrated according to an illustrative embodiment.
FIG. 12 is a flow chart of an information processing method illustrated according to an illustrative embodiment.
FIG. 13 is a block diagram of an information processing apparatus illustrated according to an illustrative embodiment.
FIG. 14 is a block diagram of an information processing apparatus illustrated according to an illustrative embodiment.
FIG. 15 is a block diagram of a terminal illustrated according to an illustrative embodiment.

### DETAILED DESCRIPTION OF THE DISCLOSURE

Illustrative embodiments will be described in detail herein, and the examples thereof are illustrated in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with the embodiments of the present disclosure. On the contrary, they are merely examples of a device and a method consistent with some aspects of embodiments of the present disclosure.

The terms used in embodiments of the present disclosure are only for purpose of description of particular embodiments, and are not intended to limit the embodiments of the present disclosure. The singular form "a", "the" and "this" used in the present disclosure is also intended to include the plural form, unless other meanings are explicitly expressed in the context. It should be understood that the term "and/or" used herein refers to include any or all of the possible combinations of one or more of listed related items.

It should be understood that, although the terms "first", "second", "third" may be employed by embodiments of the present disclosure to describe various information, these information should not limited by these terms. These terms are only used to distinguish the information of the same type from each other. For example, a first information may be referred to as a second information without departing from the scope of the embodiments of the present disclosure, and similarly, the second information may also be referred to as the first information. Depending on the context, the word "if" used herein may be interpreted as "when...", "upon..." or "in response to determination".

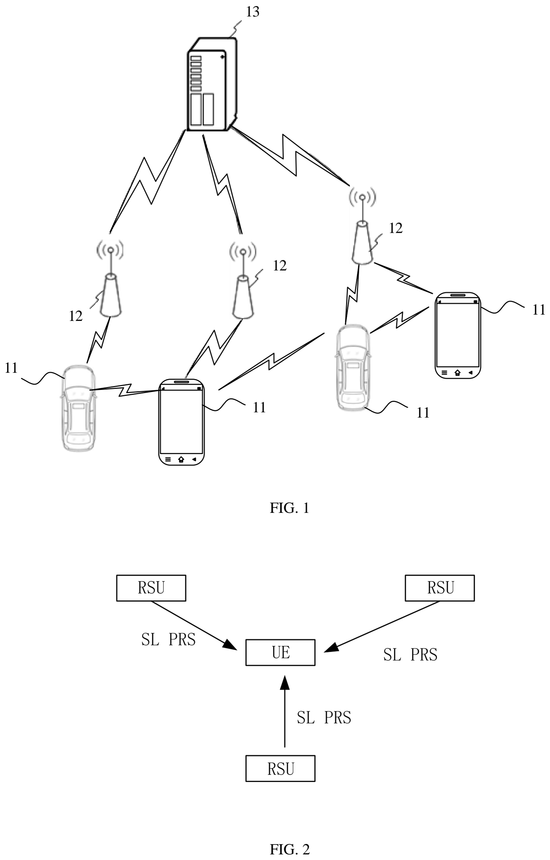

As illustrated in FIG. 1, which is a schematic diagram of a wireless communication system provided by an embodiment of the present disclosure. As illustrated in FIG. 1, the wireless communication system is a communication system based on cellular mobile communication technology, and the wireless communication system may include: a plurality of user equipments 11 and a plurality of access network devices 12.

The user equipment 11 may be a device that provides voice and/or data connectivity to a user. The user equipment 11 may communicate with one or more core networks via a radio access network (RAN), and the user equipment 11 may be an IoT user equipment, such as a sensor device, a mobile phone (or a cellular phone), and a computer having an IoT user equipment, which may be, for example, a stationary, portable, pocket-sized, hand-held, computer-built, or vehicle-mounted device. For example, a station (STA), subscriber unit, subscriber station, mobile station, mobile, remote station, access point, remote user equipment (remote terminal), access user equipment (access terminal), user terminal, user agent, user device, or user equipment (UE). Or the user equipment 11 may be a wearable device, a virtual reality (VR) device, an augmented reality (AR) device, or a VR/AR hybrid headset. Or the user equipment 11 may be a device for an unmanned aerial vehicle. Or the user equipment 11 may be a vehicle-mounted device, e.g., it may be a vehicle computer with wireless communication capabilities, or a wireless user equipment that is external to the vehicle computer. Or the user equipment 11 may also be a roadside device, e.g., it may be a street light, a signal light, or other roadside device, etc., with wireless communication capabilities.

The access network device 12 may be a device in a wireless communication system for communicating with the user equipment 11, may be a base station, or an access point, or a network device, or may refer to a device in an access network that communicates with a wireless terminal over one or more sectors of an air interface. The network device may be used for conversion between received air frames and IP packets as a router between the wireless terminal and the remainder of the access network, and the remainder of the access network may include an Internet protocol (IP) network. The network device may also coordinate attribute management of the air interface. The wireless communication system may be the 4th generation mobile communication (4G) system, also known as a Long Term Evolution (LTE) system; or the wireless communication system may be a 5G system, also known as a new radio (NR) system or a 5G NR system. Or the wireless communication system may be a further next-generation system of the 5G system. The access network in the 5G system may be called new generation-radio access network (NG-RAN).

The access network device 12 may be an evolved access device (eNB) used in the 4G system. Or the access network device 12 may be an access device (gNB) with a centralized distributed architecture in the 5G system. When the access network device 12 has a centralized distributed architecture, it typically includes a centralized unit (CU) and at least two distributed units (DUs). The centralized unit is provided with protocol stacks for packet data convergence protocol (PDCP) layer, radio link control (RLC) layer, and media access control (MAC) layer; the distributed unit is provided with a physical (PHY) layer protocol stack, and the embodiments of the present disclosure do not limit the specific realization of the access network device 12.

A wireless connection may be established between the access network device 12 and the user equipment 11 via a radio air interface. In various embodiments, the radio air interface is a radio air interface based on a fourth generation mobile communication network technology (4G) standard; or the radio air interface is a radio air interface based on a fifth generation mobile communication network technology (5G) standard, such as the radio air interface is a new radio; or the radio air interface may be a radio air interface based on a further next generation mobile communication network technology standard based on 5G.

In some embodiments, E2E (End to End) or D2D (device to device) connections may also be established between UEs 11. For example, V2V (vehicle to vehicle) communication, V2I (vehicle to infrastructure) communication and V2P (vehicle to pedestrian) communication, and other scenarios in vehicle to everything (V2X) communication.

In some embodiments, the wireless communication system described above may further include a core network device 13. A number of access network devices 12 are each connected to the core network device 13.

In some embodiments, the core network device 13 may be a mobility management entity (MME) in an evolved packet core (EPC) network. Or the core network device may be a serving gateway (SGW), a public data network gateway (PGW), a policy and charging rules function (PCRF), a home subscriber server (HSS), or the like.

In some embodiments, the core network device 13 may include one or more network elements, for example, an access and mobility management function (AMF), a session management function (SMF), a user plane function (UPF), policy control function (PCF), network repository function (NRF) entities, etc.

The PCF, the SMF, the UPF, and the like in embodiments of the present disclosure may be implemented by one physical device or may be implemented by a plurality of physical devices together. It should be understood that the PCF, the SMF, and the like in embodiments of the present disclosure may be one logical functional module in the physical device or one logical functional module composed of a plurality of physical devices, which is not limited by the embodiments of the present disclosure.

In order to facilitate understanding by those skilled in the art, a plurality of implementations are set forth in embodiments of the present disclosure to provide a clear explanation of the technical solutions of embodiments of the present disclosure. Of course, it may be understood by those skilled in the art that the plurality of embodiments provided by embodiments of the present disclosure may be performed alone, or may be performed in combination with the methods of the other embodiments in embodiments of the present disclosure, or may be performed alone or in combination with some of the methods in other related technologies, which is not limited by embodiments of the present disclosure.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The term used in embodiments of the present disclosure is for the purpose of describing specific embodiments only, and is not intended to limit the present disclosure.

The positioning based on the sidelink (SL) between UEs includes absolute positioning, relative positioning, and ranging, and the sidelink may also be referred to as a direct link. Absolute positioning is to determine the absolute coordinates of the UE, relative positioning is to determine the coordinates of the UE relative to a reference point, and ranging is to determine the distance and/or angle of the UE relative to a reference point. Ranging usually only involves ranging between two UEs, but absolute positioning and relative positioning may involve a plurality of UEs participating in positioning.

In embodiments of the present disclosure, as illustrated in FIG. 2, taking positioning based on a downlink time difference of arrival (DL-TDOA) as an example, the UE may determine a specific position of the UE with respect to a road side unit (RSU) by measuring a plurality of RSUs and a sidelink positioning reference signal (SL PRS).

In addition to positioning based on DL-TDOA, the positioning scheme may also implement positioning with one or more of the following information: uplink time difference of arrival (UL-TDOA), multiple round trip time (Multiple RTT), angle-of-arrival (AOA), angle-of-departure (AOD), or carrier phase positioning, etc.

If the positioning result does not have absolute position coordinates converted from absolute position information such as global positioning system (GPS) based on RSU, then the positioning result is relative positioning, otherwise, the positioning result is absolute positioning.

The positioned UE is a target UE, and other UEs supporting the positioning of the target UE are anchor UEs. If only two UEs are involved in the positioning, they are each other's anchor UE.

The anchor UE has different types, and may include, for example, an anchor UE of an RSU type. An anchor UE of the RSU type belongs to an infrastructure that may provide positioning services by cooperating with other RSUs. For example, an ordinary UE may also serve as an anchor UE, but it is difficult for the ordinary UE to assist in providing positioning services together with other UEs. In addition, some anchor UEs have position information such as GPS, which can assist other UEs in absolute positioning; and some other anchor UEs may not have position information such as GPS.

Protocols for exchanging positioning messages between two UEs include a sidelink positioning protocol (sidelink LPP, SLPP) or a ranging and sidelink positioning protocol (RSPP).

For LPP (long term evolution, LTE, positioning protocol), an LPP session is created for a location request, and the location request may be, for example, a mobile terminated location request (MT-LR), a mobile originated location request (MO-LR) or a network induced location request (NI-LR). An LPP session involves only two nodes, such as a UE and a location management function (LMF). A plurality of transactions may be created within a session, and each transaction is for one LPP operation. The LPP message needs to carry a transaction ID. The transaction ID indicates that the initiator is a server type node, or the transaction ID indicates that the initiator is a client type node.

For an SLPP session, a plurality of UEs may be involved in one session, and client and server modes in LPP may no longer be applicable, so the transaction ID cannot simply use server or client to distinguish the initiator. In addition to the initiator, participants also need to be considered.

Furthermore, in the LPP transaction, since only two UEs are involved, when one of the UEs transmits an end transaction indication, it may be determined that the transaction is ended. However, in a case where a plurality of UEs may participate in a transaction in SLPP, it is also necessary to consider how to determine the end of the transaction.

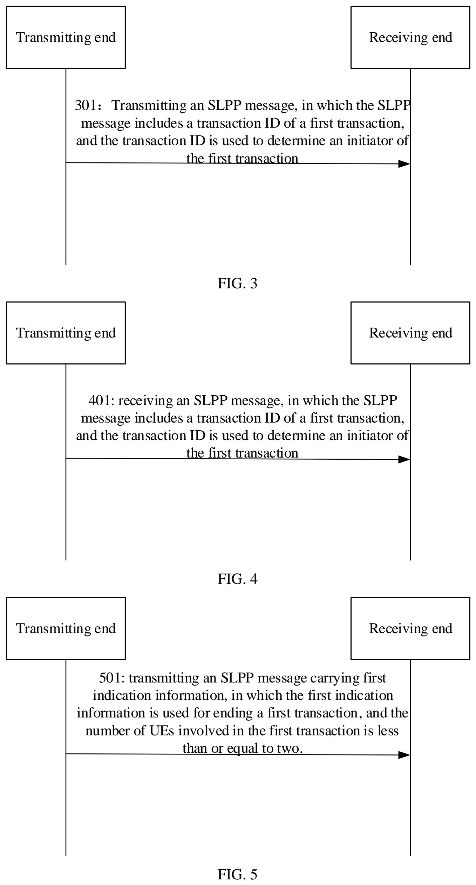

FIG. 3 is a flow chart of an information processing method illustrated according to an illustrative embodiment. As illustrated in FIG. 3, the method is performed by the transmitting end and may include the following step.

In step 301: an SLPP message is transmitted, in which the SLPP message includes a transaction ID of a first transaction, and the transaction ID is used to determine an initiator of the first transaction.

In some examples, the first transaction may be any one of all transactions within one session.

In some examples, the transmitting end may be an initiator of the first transaction, or the transmitting end may be a participant of the first transaction. The participant of the first transaction is different from the initiator of the first transaction.

In some examples, the initiator of the first transaction may be an initiator of the session in which the first transaction resides, or the initiator of the first transaction may be a participant of the session in which the first transaction resides. The initiator of the session in which the first transaction resides is different from the participant of the session in which the first transaction resides.

In some examples, the initiator of the first transaction may be an anchor UE, and the participant of the first transaction may be a target UE; or the initiator of the first transaction may be a target UE, and the participant of the first transaction may be an anchor UE.

For example, the anchor UE may be an anchor UE of an RSU type and/or a UE of a type different from the RSU type.

In some examples, a participant within the first transaction different from the initiator may be one UE or a UE group. The UE group includes a plurality of UEs.

In the present embodiment, the transaction ID of the first transaction is used to identify the first transaction, and is used to determine the initiator of the first transaction.

In some examples, the transaction ID of the first transaction may include a UE ID of the initiator of the first transaction.

In some examples, the transaction ID of the first transaction may include indication information, and the indication information is used to determine the initiator of the first transaction.

By way of example, the indication information may be a UE type, and the UE type may include a server type or a client type.

For example, in case where there are two UEs involved in the first transaction, the UE ID of the initiator of the first transaction may be indicated using the UE type.

For example, the server type may be used to indicate that the server UE is the initiator, or the client type may be used to indicate that the client UE is the initiator.

If two UEs are involved in the same transaction, two different UEs are distinguished by using the UE type, so that the initiator of the same transaction may be distinguished by the UE type, and compatibility with related technologies may be improved.

In some examples, the initiator of the first transaction is a server UE, and the transaction ID of the first transaction carries a UE type, and the UE type is used to indicate the UE ID of the initiator of the first transaction.

In some examples, in the above step 301, the transmitting end transmits an SLPP message carrying the transaction ID of the first transaction to the receiving end.

For example, the transmitting end is the initiator of the first transaction, and the receiving end includes a participant of the first transaction different from the initiator.

For example, the transmitting end is the participant of the first transaction, and the receiving end includes an initiator of the first transaction different from the participant.

For example, the transmitting end may be a first participant among a plurality of participants in the first transaction, and the receiving end may include other participants in the first transaction different from the first participant.

In some examples, the first transaction may be used for an SLPP operation, e.g., the SLPP operation may include at least one of a capability exchange, an auxiliary data transmission, and a position information transmission.

In some examples, different SLPP messages within the same transaction take the same transaction number.

In some examples, the SLPP message includes at least one of an SLPP transaction creation request message, an SLPP transaction creation complete message, and an SLPP message carrying transaction content.

In some examples, the SLPP message carries the transaction ID of the first transaction and may be used to trigger the creation of the first transaction.

By way of example, the SLPP message is a first SLPP message carrying the transaction ID of the first transaction, and the SLPP message is used to trigger the creation of the first transaction. In this case, the SLPP message may be a transaction creation request message for the first transaction.

For example, the SLPP message received by the receiving end is the first SLPP message carrying the transaction ID of the first transaction, which triggers the establishment of the first transaction. In this case, the SLPP message may be a transaction creation request message for the first transaction.

In some examples, in a case where the SLPP message includes an SLPP message body, the transaction ID is carried in the SLPP message. The SLPP message body may be, for example, a slpp-MessageBody.

In the information processing method provided by embodiments of the present disclosure, by transmitting an SLPP message, the SLPP message includes a transaction ID of a first transaction, and the transaction ID is used to determine an initiator of the first transaction, so that the initiator of the transaction may be determined by using the transaction ID included in the SLPP message, reducing a situation in which a plurality of participants cannot distinguish the initiator of the transaction when participating in the same transaction or the initiators determined by different participants in the same transaction are different, and improving the accuracy of information interaction in the transaction process. Since the initiator of the transaction may be more accurately distinguished according to the transaction ID, the accuracy of positioning may be improved by using the SLPP message carrying the transaction ID for positioning.

In some embodiments, the transaction ID may include:
a first ID used for indicating the initiator of the first transaction.

In some examples, the first ID may include a UE ID of an initiator of the first transaction.

The UE ID may be used to identify the UE. For example, different UEs involved in the same transaction have different UE IDs.

In other examples, the same UE has different UE IDs for different transactions.

In some examples, the first ID may be a substring at a first specified position in a string of the transaction ID.

By way of example, the substring may include one character, or the substring may include a plurality of continuously distributed characters.

For example, the string of the transaction ID includes M characters, and the first ID may be a string composed of the first N characters among the M characters, or the first ID may be a string composed of the last N characters among the M characters, or the first ID may include N characters continuously distributed starting from any intermediate position among the M characters, where N is a positive integer greater than or equal to 1 and less than M.

In the present embodiment, the substring at the first specified position in the string of the transaction ID constitutes the string of the first ID, which can facilitate rapid decoding by the subsequent receiving end, and thus quickly determine the initiator of the first transaction.

In the present embodiment, since the transaction ID includes the first ID, the first ID is used to indicate the initiator of the first transaction, so that the receiving end of the SLPP message may more accurately distinguish the initiator of the transaction, and different participants of the first transaction may determine the unique initiator of the first transaction according to the first ID, facilitating improvement of the accuracy of information interaction in the same transaction.

In some embodiments, the first ID may include at least one of:
a source layer 2 ID of the initiator;
a destination layer 2 ID of the initiator;
an application layer ID of the initiator; or
an SLPP UE ID of the initiator.

In some embodiments, the transaction ID may further include:
a second ID used for indicating a participant of the first transaction.

In some examples, the second ID may include a UE ID of a participant of the first transaction.

The UE ID may be used to identify the UE. For example, different UEs involved in the same transaction have different UE IDs.

In other examples, the same UE has different UE IDs for different transactions.

In some examples, the second ID may be a substring at a second specified position in the string of the transaction ID.

By way of example, the substring may include one character, or the substring may include a plurality of continuously distributed characters.

By way of example, the different second IDs indicate different participants of the first transaction, and the different second IDs correspond to substrings at different positions in the string of the transaction ID.

By way of example, in a case where the first ID is a substring at a first specified position in the string of the transaction ID, and the second specified position is different from the first specified position.

In the present embodiment, the substring at the second specified position in the string of the transaction ID constitutes the string of the second ID, which can facilitate quick decoding by the subsequent receiving end, and thus quickly determine the participant of the first transaction.

In the present embodiment, since the transaction ID includes the second ID, and the second ID is used to indicate the participant of the first transaction, when the receiving end of the SLPP message receives the SLPP message carrying the transaction ID of the first transaction, the receiving end of the SLPP message may determine whether it is the participant of the first transaction according to the second ID included in the transaction ID of the first transaction. For example, in the process of positioning using the SLPP message, some UEs have absolute position information, while some UEs do not have absolute position information. If a participant of the transaction that needs positioning needs to perform absolute positioning, the UE with absolute position information may be designated as a participant through the second ID.

In some embodiments, the participant of the first transaction is one UE, and the second ID may include at least one of:
a source layer 2 ID of the participant;
a destination layer 2 ID of the participant;
an application layer ID of the participant; or
an SLPP UE ID of the participant.

In some embodiments, the participant is a UE group, and the second ID may include at least one of:
a group ID of the UE group;
a source layer 2 groupcast ID of the UE group;
a destination layer 2 groupcast ID of the UE group;
an application layer group ID of the UE group; or
an SLPP UE group ID of the UE group.

In some examples, at least one of a source layer 2 groupcast ID, a destination layer 2 groupcast ID, and an application layer group ID of the UE group may be provided by an application layer of the initiator of the session and provided to the participant of the session through a message for the establishment of the session.

In some examples, the SLPP UE group ID may be created by the initiator of the session and provided to the participant of the session through a message for establishment of the session.

In some embodiments, the participant of the first transaction is a UE group, and the second ID includes at least one of:
a source layer 2 ID list of the participant;
a destination layer 2 ID list of the participant;
an application layer ID list of the participant; or
an SLPP UE ID list of the participant.

In some embodiments, the first transaction is created using a broadcast mode, and the transaction ID of the first transaction may or may not carry the second ID.

In the present embodiment, the first transaction is created using a broadcast mode, and there are a plurality of receiving ends of the SLPP message. When these receiving ends receive the SLPP message carrying the transaction ID of the first transaction, if the transaction ID of the first transaction carries the second ID, the receiving ends may determine whether they are participants of the first transaction according to the second ID. If a receiving end determines that it is a participant of the first transaction, it participates in the first transaction. If a receiving end determines that it is not a participant in the first transaction, it may ignore the SLPP message.

For example, if one or more nodes around the target UE are nodes that have position information themselves, these nodes may serve as anchor UEs. Therefore, the second ID carried by the transaction ID of the first transaction indicates that the anchor UE is the participant of the first transaction, and the efficiency and accuracy of positioning the target UE may be improved.

In some embodiments, the first transaction is created using a broadcast mode, and the second ID carried in the transaction ID of the first transaction includes at least one of: a source layer 2 broadcast ID, a destination layer 2 broadcast ID, or an SLPP broadcast ID of the participant.

In some examples, at least one of the source layer 2 broadcast ID and the destination layer 2 ID of the participant may be provided by the application layer of the initiator of the session and provided to the participant of the session through a message for the establishment of the session. The SLPP broadcast ID may be created by the initiator of the session and provided to the participant of the session through a message for the establishment of the session.

In some embodiments, the participant of the first transaction is one UE or a UE group, and the transaction ID includes the second ID.

The UE group may include one or more UEs relative to a single UE. Based on the transaction of the UE group, transaction and/or positioning involving a plurality of parties may be implemented in a case where the UE group has a plurality of UEs. The accuracy of positioning may be improved by using the UE group to locate the initiator, or the efficiency of positioning may be improved by locating the UE group by the initiator.

In some embodiments, the first transaction is created using a broadcast mode, and the transaction ID does not include the second ID.

In the present embodiment, the first transaction is created using a broadcast mode, and the transaction ID of the first transaction may include the first ID and does not include the second ID, so that in a case where the receiving end is not an initiator of the first transaction, the receiving end may determine itself as the participant of the first transaction.

In some embodiments, the transaction ID of the first transaction is different from a transaction ID of a second transaction, and the first transaction and the second transaction are parallel transactions within the same session.

In some examples, the transaction ID of the first transaction may be used to identify a third transaction within a first session in which the first transaction resides, and the third transaction is a transaction that is not parallel to the first transaction.

For example, the third transaction may be a transaction within the first session that is created before the creation of the first transaction, or the third transaction may be a transaction within the first session that is created after the end of the first transaction.

In some embodiments, the transaction ID of the first transaction is different from the transaction ID of the second transaction, indicating at least one of:
the initiator of the first transaction is different from an initiator of the second transaction;
a participant of the first transaction is different from a participant of the second transaction; or
the transaction ID includes a transaction number, and the transaction number of the first transaction is different from a transaction number of the second transaction.

In some examples, different SLPP messages within the same transaction take the same transaction number.

In some embodiments, the method may further include:
transmitting an SLPP message carrying indication information,
the indication information being used to indicate one of:
ending the first transaction; or
the SLPP message being a last message of the transmitting end within the first transaction or a last message carrying an SLPP message body of the transmitting end within the first transaction.

In some examples, in a case where the number of UEs involved in the first transaction is less than or equal to two, the initiator or participant of the first transaction may transmit an SLPP message carrying indication information for indicating the end of the first transaction. Alternatively, in a case where the number of UEs involved in the first transaction is greater than two, the initiator of the first transaction may transmit an SLPP message carrying indication information for indicating the end of the first transaction.

For example, the SLPP message carrying the indication information may be the last SLPP message of the first transaction carrying the SLPP message body.

In this example, after receiving the SLPP message carrying the indication information, and confirming the end of the first transaction, or confirming that the SLPP message is the last SLPP message of the first transaction carrying the SLPP message body, the receiving end no longer expects to receive any SLPP message related to the first transaction or any SLPP message carrying the SLPP message body related to the first transaction. That is, when the receiving end receives an SLPP message of any transaction having the same transaction ID as the first transaction, or an SLPP message carrying an SLPP message body of any transaction having the same transaction ID as the first transaction, the SLPP will be treated as an SLPP message of a new transaction.

In some examples, the number of UEs involved in the first transaction is greater than two, the participant of the first transaction may transmit an SLPP message carrying indication information, in which the indication information indicates that the SLPP message is a last message of the transmitting end within the first transaction or a last message carrying an SLPP message body of the transmitting end within the first transaction.

In some embodiments, the number of UEs involved in the first transaction is less than or equal to two, and the method further includes:
transmitting an SLPP message carrying first indication information, in which the first indication information is used for ending the first transaction; and
in which the SLPP message carrying the first indication information includes one of:
   a last SLPP message involved in the first transaction; or
   a last SLPP message carrying an SLPP message body involved in the first transaction.

In some embodiments, a participant of the first transaction is a UE group, the transmitting end is a UE within the UE group, and the method further includes:

transmitting an SLPP message carrying second indication information, in which the second indication information indicates that the SLPP message carrying the second indication information is a last message of the transmitting end within the first transaction or a last message carrying an SLPP message body of the transmitting end within the first transaction.

In some embodiments, a participant of the first transaction is a UE group, the transmitting end is the initiator of the first transaction, and the method further includes:
in response to determining to end the first transaction, transmitting an SLPP message carrying third indication information, in which the third indication information is used for ending the first transaction.

In some embodiments, a participant of the first transaction is a UE group, the transmitting end is any UE involved in the first transaction, and the method further includes:
transmitting an SLPP message carrying fourth indication information, in which the fourth indication information indicates that the SLPP message carrying the fourth indication information is a last message of the transmitting end within the first transaction or a last message carrying an SLPP message body of the transmitting end within the first transaction.

In embodiments of the present disclosure, some or all of the steps, optional implementations thereof, may be arbitrarily combined with some or all of the steps in other embodiments, and may be arbitrarily combined with optional implementations of other embodiments.

Subsequently, the information processing method performed by the receiving end will be described, which is similar to the description of the information processing method performed by the transmitting end described above. Furthermore, for technical details not disclosed in embodiments of the information processing method performed by the receiving end, reference may be made to the description of an example of the information processing method performed by the transmitting end, and detailed description will not be made here.

FIG. 4 is a flow chart of an information processing method illustrated according to an illustrative embodiment. As illustrated in FIG. 4, the method is performed by the receiving end and may include the following step.

In step 401: an SLPP message is received, in which the SLPP message includes a transaction ID of a first transaction, and the transaction ID is used to determine an initiator of the first transaction.

In some examples, the first transaction may be any one of all transactions within one session.

In some examples, in the above step 401, the receiving end receives an SLPP message carrying the transaction ID of the first transaction transmitted by the transmitting end.

In some examples, in a case where the transmitting end is an initiator of the first transaction, the receiving end is the participant of the first transaction; or in a case where the transmitting end is a participant of the first transaction, the receiving end may include: the initiator of the first transaction and/or the participant of the first transaction different from the transmitting end.

The participant of the first transaction is different from the initiator of the first transaction.

In the present embodiment, the transaction ID of the first transaction is used to identify the first transaction, and is used to determine the initiator of the first transaction.

In some examples, for the related description of the transaction ID and the like reference may be made to the related description of the transaction ID and the like in step 301 of FIG. 3, and will not be repeatedly described here.

In the information processing method provided by embodiments of the present disclosure, by receiving an SLPP message, the SLPP message includes a transaction ID of a first transaction, and the transaction ID is used to determine an initiator of the first transaction, so that the receiving end may determine the initiator of the transaction by using the transaction ID included in the SLPP message, reducing a situation in which a plurality of participants cannot distinguish the initiator of the transaction when participating in the same transaction or the initiators determined by different participants in the same transaction are different, and improving the accuracy of information interaction in the transaction process. Since the initiator of the transaction may be more accurately distinguished according to the transaction ID, the accuracy of positioning may be improved by using the SLPP message carrying the transaction ID for positioning.

In some embodiments, the transaction ID includes:
a first ID used for indicating the initiator of the first transaction.

In some embodiments, the first ID includes at least one of:
a source layer 2 ID of the initiator;
a destination layer 2 ID of the initiator;
an application layer ID of the initiator; or
an SLPP user equipment (UE) ID of the initiator.

In some embodiments, the transaction ID further includes:
a second ID used for indicating a participant of the first transaction.

In some embodiments, the participant is one UE, and the second ID includes at least one of:
a source layer 2 ID of the participant;
a destination layer 2 ID of the participant;
an application layer ID of the participant; or
an SLPP UE ID of the participant.

In some embodiments, the participant is a UE group, and the second ID includes at least one of:
a group ID of the UE group;
a source layer 2 groupcast ID of the UE group;
a destination layer 2 groupcast ID of the UE group;
an application layer group ID of the UE group; or
an SLPP UE group ID of the UE group.

In some embodiments, the participant is a UE group, and the second ID includes at least one of:
a source layer 2 ID list of the participant;
a destination layer 2 ID list of the participant;
an application layer ID list of the participant; or
an SLPP UE ID list of the participant.

In some embodiments, the first transaction is created using a broadcast mode, and the second ID includes at least one of: a source layer 2 broadcast ID, a destination layer 2 broadcast ID, or an SLPP broadcast ID of the participant;
or the participant of the first transaction is one UE or a UE group, and the transaction ID includes the second ID;
or the first transaction is created using a broadcast mode, and the transaction ID does not include the second ID.

In some embodiments, the transaction ID of the first transaction is different from a transaction ID of a second transaction, and the first transaction and the second transaction are parallel transactions within the same session.

In some embodiments, the initiator of the first transaction is different from an initiator of the second transaction;
and/or a participant of the first transaction is different from a participant of the second transaction;
and/or the transaction ID includes a transaction number, and the transaction number of the first transaction is different from a transaction number of the second transaction.

In some embodiments, the number of UEs involved in the first transaction is less than or equal to two, and the method further includes:
receiving an SLPP message carrying first indication information, in which the first indication information is used for ending the first transaction; and
in which the SLPP message carrying the first indication information includes one of:
a last SLPP message involved in the first transaction; or
a last SLPP message carrying an SLPP message body involved in the first transaction.

In some embodiments, a participant of the first transaction is a UE group, the receiving end is the initiator of the first transaction, and the method further includes:
receiving an SLPP message carrying second indication information transmitted by the transmitting end, in which the second indication information indicates that the SLPP message carrying the second indication information is a last message of the transmitting end within the first transaction or a last message carrying an SLPP message body of the transmitting end within the first transaction.

In some embodiments, a participant of the first transaction is a UE group, the receiving end is a UE within the UE group, and the method further includes:
in response to receiving an SLPP message carrying third indication information, determining to end the first transaction or determining that the SLPP message carrying the third indication information is a last message carrying an SLPP message body of the transmitting end of the first transaction.

In some embodiments, a participant of the first transaction is a UE group, and the method further includes:
in response to receiving an SLPP message carrying fourth indication information, determining to end the first transaction, in which the SLPP message carrying the fourth indication information is transmitted by all other UEs involved in the first transaction except the receiving end.

In embodiments of the present disclosure, some or all of the steps, optional implementations thereof, may be arbitrarily combined with some or all of the steps in other embodiments, and may be arbitrarily combined with optional implementations of other embodiments.

FIG. 5 is a flow chart of an information processing method illustrated according to an illustrative embodiment. As illustrated in FIG. 5, the method is performed by the transmitting end and may include the following step.

In step 501: an SLPP message carrying first indication information is transmitted, in which the first indication information is used for ending the first transaction; and the number of UEs involved in the first transaction is less than or equal to two.

In some examples, the SLPP message carrying the first indication information includes one of: the last SLPP message involved in the first transaction; or the last SLPP message carrying the SLPP message body involved in the first transaction.

For example, when the first transaction involves two UEs, and the SLPP message to be transmitted by the transmitting end is the last SLPP message in the first transaction or the last message carrying the SLPP message body in the first transaction, the transmitting end may add first indication information to the SLPP message to indicate the end of the first transaction.

For example, when the first transaction involves two UEs and the transmitting end is the initiator of the first transaction, the transmitting end may transmit the SLPP message carrying the first indication information to enable the receiving end (here, the receiving end is the participant of the first transaction) to know the end of the first transaction when receiving the first SLPP message.

In some examples, the first indication information may be carried in a message header or a message body of the SLPP message.

For example, when the first indication information and the transaction content are simultaneously carried in the message body of the SLPP message, the message body further includes a distinguishing flag, and the distinguishing flag is used to distinguish the first indication information and the transaction content in the message body.

In some examples, the first indication information may be a transaction end indication.

For example, the transaction end indication is indicated as an end tag, and the transaction end indication may be "end session"; or the transaction end indication is a sequence of bits indicating the end.

In a case where the SLPP message of the first transaction carries the message body, if the SLPP message is the last SLPP message carrying the message body, the SLPP message may carry the transaction end indication, and there is no need to construct a special message carrying the transaction end indication in addition to the SLPP message carrying the message body, so that the SLPP message may be multiplexed and the implementation is simple.

In some examples, the transaction end indication may be carried in an SLPP message that does not have the SLPP message body. In this example, the SLPP message carrying the first indication information may be understood as a dedicated SLPP message or a specific SLPP message for indicating the end of the transaction.

For example, after the last SLPP message carrying the message body of the first transaction is transmitted, the SLPP message carrying the transaction end indication is transmitted.

In embodiments of the present disclosure, the number of UEs involved in the first transaction is less than or equal to two. The transmitting end may transmit an SLPP message carrying the first indication information for the end of the first transaction, so that the receiving end may directly end the first transaction according to the first indication information.

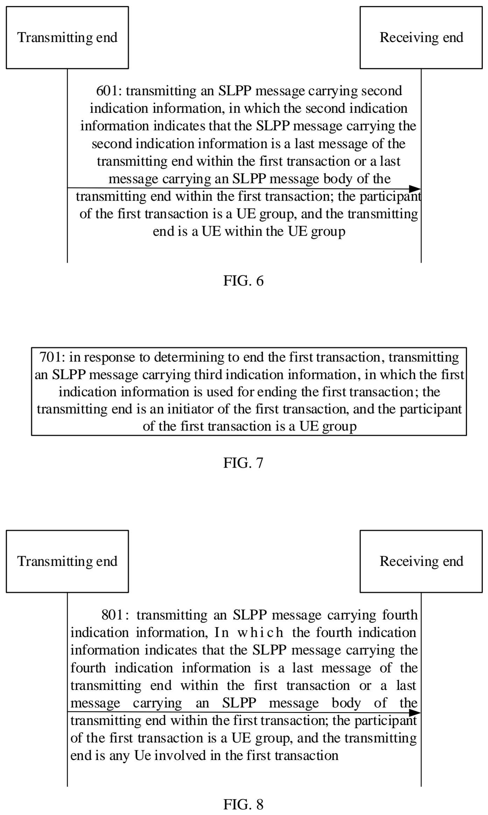

FIG. 6 is a flow chart of an information processing method illustrated according to an illustrative embodiment. As illustrated in FIG. 6, the method is performed by the transmitting end and may include the following step.

In step 601: an SLPP message carrying second indication information is transmitted, in which the second indication information indicates that the SLPP message carrying the second indication information is a last message of the transmitting end within the first transaction or a last message carrying an SLPP message body of the transmitting end within the first transaction.

In some examples, the second indication information may be carried in a message header or a message body of the SLPP message.

For example, when the second indication information and the transaction content are simultaneously carried in the message body of the SLPP message, the message body further includes a distinguishing flag, and the distinguishing flag is used to distinguish the second indication information and the transaction content in the message body.

In some examples, the second indication information may be a transaction end indication.

For example, the transaction end indication is indicated as an end tag, and the transaction end indication may be "end session"; or the transaction end indication is a sequence of bits indicating the end.

When the SLPP message transmitted by the transmitting end in the first transaction carries the message body, it may carry the transaction end indication, thus there is no need to construct a special message carrying the transaction end indication in addition to the SLPP message carrying the message body, so that the SLPP message may be multiplexed and the implementation is simple.

In some examples, the transaction end indication may be carried in an SLPP message that does not have the SLPP message body. In this example, the SLPP message carrying the second indication information may be understood as a dedicated SLPP message or a specific SLPP message.

For example, after the last SLPP message carrying the message body of the first transaction is transmitted by the transmitting end within the first transaction, the SLPP message carrying the transaction end indication is transmitted.

In some examples, the transmitting end may transmit the SLPP message carrying the second indication information in a unicast, groupcast, or broadcast manner.

In the present embodiment, in a case where the transmitting end transmits the SLPP message carrying the second indication information, and the transmitting end is the initiator of the first transaction, the receiving end may determine, according to the second indication information carried by the SLPP message, that the SLPP message is a last message of the transmitting end within the first transaction or a last message carrying an SLPP message body of the transmitting end within the first transaction. In this way, it is beneficial to improving the accuracy of determining the end of the transaction between the initiator and a plurality of participants of the same transaction.

In some embodiments, the method further includes:
receiving an SLPP message carrying third indication information, in which the third indication information is used for ending the first transaction, and the SLPP message carrying the third indication information is an SLPP message transmitted by the initiator of the first transaction.

In some embodiments, the method further includes:
according to an SLPP message carrying third indication information transmitted by the initiator of the first transaction, confirming that the first transaction is ended, or confirming that the SLPP message carrying the third indication information is a last message carrying an SLPP message body of the transmitting end of the first transaction.

In the present embodiment, after, according to the third indication information, confirming the end of the first transaction, or confirming that the SLPP message carrying the third indication information is the last SLPP message of the first transaction carrying the SLPP message body, the participant of the first transaction no longer expects to receive any SLPP message related to the first transaction or any SLPP message carrying the SLPP message body related to the first transaction. That is, when receiving an SLPP message of any transaction having the same transaction ID as the first transaction, or an SLPP message carrying an SLPP message body of any transaction having the same transaction ID as the first transaction, the SLPP will be treated as an SLPP message of a new transaction.

In the present embodiment, since the same transaction involves a plurality of different participants, by receiving the SLPP message carrying the third indication information transmitted by the initiator of the first transaction, the participant of the first transaction may know the end of the first transaction according to the third indication information, which is beneficial to improving the accuracy of determining the end of the transaction between the initiator and the plurality of participants of the same transaction.

In embodiments of the present disclosure, some or all of the steps, optional implementations thereof, may be arbitrarily combined with some or all of the steps in other embodiments, and may be arbitrarily combined with optional implementations of other embodiments.

FIG. 7 is a flow chart of an information processing method illustrated according to an illustrative embodiment. As illustrated in FIG. 7, the method is performed by the transmitting end and may include the following step.

In step 701: in response to determining to end the first transaction, an SLPP message carrying third indication information is transmitted, in which the third indication information is used for ending the first transaction. The transmitting end is the initiator of the first transaction, and the participant of the first transaction is a UE group.

In some examples, the third indication information may be a transaction end indication.

In some examples, determining to end the first transaction may include determining that the first transaction needs to be ended.

In some examples, the initiator of the first transaction may transmit an SLPP message carrying the third indication information, so that the receiving end knows that the first transaction is ended after receiving the SLPP message.

For example, the initiator of the first transaction determines to end the first transaction based on receiving the SLPP message carrying the second indication information transmitted by all participants of the first transaction.

In some examples, the initiator of the first transaction autonomously determines to end the first transaction. In some examples, the initiator of the first transaction may actively end the first transaction, that is, it may directly determine to end the first transaction without using the SLPP message carrying the second indication information transmitted by the participant of the first transaction.

In some examples, the third indication information may be carried in a message header or a message body of the SLPP message.

For example, when the third indication information and the transaction content are simultaneously carried in the message body of the SLPP message, the message body further includes a distinguishing flag, and the distinguishing flag is used to distinguish the third indication information and the transaction content in the message body.

In some examples, the third indication information may be a transaction end indication.

For example, the transaction end indication is indicated as an end tag, and the transaction end indication may be "end session"; or the transaction end indication is a sequence of bits indicating the end.

When the SLPP message transmitted by the transmitting end in the first transaction carries the message body, it may carry the transaction end indication, thus there is no need to construct a special message carrying the transaction end indication in addition to the SLPP message carrying the message body, so that the SLPP message may be multiplexed and the implementation is simple.

In some examples, the transaction end indication may be carried in an SLPP message that does not have the SLPP message body. In this example, the SLPP message carrying the third indication information may be understood as a dedicated SLPP message or a specific SLPP message.

For example, after the last SLPP message carrying the message body of the first transaction is transmitted by the transmitting end within the first transaction, the SLPP message carrying the transaction end indication is transmitted.

In some examples, the transmitting end may transmit the SLPP message carrying the third indication information in a unicast, groupcast, or broadcast manner.

In the present embodiment, the initiator of the first transaction transmits an SLPP message carrying the third indication information, and the participant receiving the SLPP message may know that the first transaction is ended according to the third indication information carried by the SLPP message. In this way, it is beneficial to improving the accuracy of determining the end of the transaction between the initiator and a plurality of participants of the same transaction.

FIG. 8 is a flow chart of an information processing method illustrated according to an illustrative embodiment. As illustrated in FIG. 8, the method is performed by the transmitting end and may include the following step.

In step 801: an SLPP message carrying fourth indication information is transmitted, in which the fourth indication information indicates that the SLPP message carrying the fourth indication information is a last message of the transmitting end within the first transaction or a last message carrying an SLPP message body of the transmitting end within the first transaction. The participant of the first transaction is a UE group, and the transmitting end is any UE involved in the first transaction.

By way of example, the UE group may include a plurality of UEs.

In some examples, the fourth indication information may be carried in a message header or a message body of the SLPP message.

For example, when the fourth indication information and the transaction content are simultaneously carried in the message body of the SLPP message, the message body further includes a distinguishing flag, and the distinguishing flag is used for distinguishing the fourth indication information and the transaction content in the message body.

In some examples, the fourth indication information may be a transaction end indication.

For example, the transaction end indication is indicated as an end tag, and the transaction end indication may be "end session"; or the transaction end indication is a sequence of bits indicating the end.

When the SLPP message transmitted by the transmitting end in the first transaction carries the message body, it may carry the transaction end indication, thus there is no need to construct a special message carrying the transaction end indication in addition to the SLPP message carrying the message body, so that the SLPP message may be multiplexed and the implementation is simple.

In some examples, the transaction end indication may be carried in an SLPP message that does not have the SLPP message body. In this example, the SLPP message carrying the fourth indication information may be understood as a dedicated SLPP message or a specific SLPP message.

For example, after the last SLPP message carrying the message body of the first transaction is transmitted by the transmitting end within the first transaction, the SLPP message carrying the transaction end indication is transmitted.

In some examples, the transmitting end may transmit the SLPP message carrying the fourth indication information in a unicast, groupcast, or broadcast manner.

In the present embodiment, in a case where a participant of the first transaction is a UE group, the transmitting end is any UE involved in the first transaction, the transmitting end transmits an SLPP carrying fourth indication information, so that the receiving end receives the SLPP message carrying fourth indication information and may confirm that the SLPP message is a last message transmitted by the transmitting end within the first transaction or a last message carrying an SLPP message body transmitted by the transmitting end within the first transaction. In this way, it is beneficial to improving the accuracy of determining the end of the transaction between the initiator and a plurality of participants of the same transaction.

In embodiments of the present disclosure, some or all of the steps, optional implementations thereof, may be arbitrarily combined with some or all of the steps in other embodiments, and may be arbitrarily combined with optional implementations of other embodiments.

Subsequently, the information processing method performed by the receiving end will be described, which is similar to the description of the information processing method performed by the transmitting end described above. Furthermore, for technical details not disclosed in embodiments of the information processing method performed by the receiving end, reference may be made to the description of an example of the information processing method performed by the transmitting end, and detailed description will not be made here.

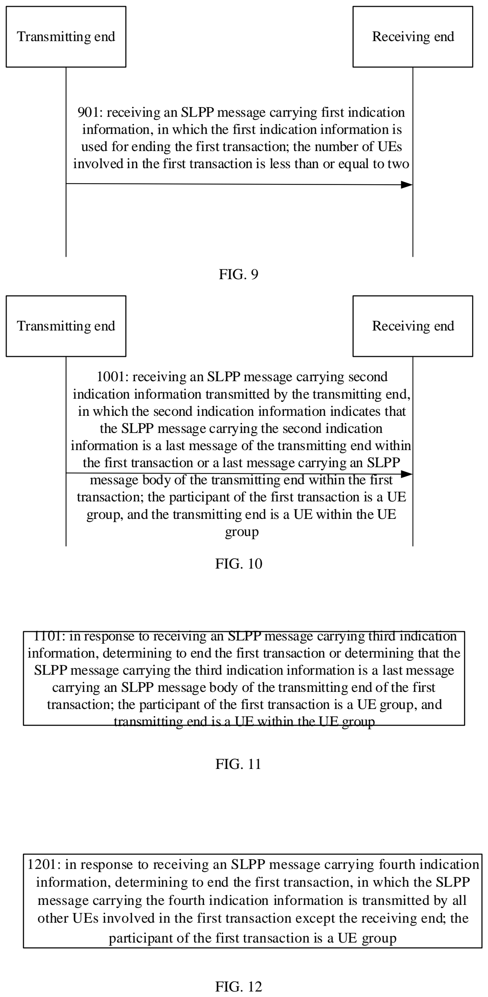

FIG. 9 is a flow chart of an information processing method illustrated according to an illustrative embodiment. As illustrated in FIG. 9, the method is performed by the receiving end and may include the following step.

In step 901: an SLPP message carrying first indication information is received, in which the first indication information is used for ending the first transaction; and the number of UEs involved in the first transaction is less than or equal to two.

In some examples, the SLPP message carrying the first indication information includes one of: the last SLPP message involved in the first transaction; or the last SLPP message carrying the SLPP message body involved in the first transaction.

For example, when the first transaction involves two UEs, and the SLPP message to be transmitted by the transmitting end is the last SLPP message in the first transaction or the last message carrying the SLPP message body in the first transaction, the transmitting end may add first indication information to the SLPP message to indicate the end of the first transaction.

For example, in a case where the first transaction involves two UEs and the transmitting end is the initiator of the first transaction, the transmitting end may transmit the SLPP message carrying the first indication information to enable the receiving end (here, the receiving end is the participant of the first transaction) to determine that the first transaction is ended when receiving the first SLPP message.

In some examples, the first indication information may be carried in a message header or a message body of the SLPP message.

For example, when the first indication information and the transaction content are simultaneously carried in the message body of the SLPP message, the message body further includes a distinguishing flag, and the distinguishing flag is used to distinguish the first indication information and the transaction content in the message body.

In some examples, the first indication information may be a transaction end indication.

For example, the transaction end indication is indicated as an end tag, and the transaction end indication may be "end session"; or the transaction end indication is a sequence of bits indicating the end.

When the SLPP message of the first transaction carries the message body, it may carry the transaction end indication, thus there is no need to construct a special message carrying the transaction end indication in addition to the SLPP message carrying the message body, so that the SLPP message may be multiplexed and the implementation is simple.

In some examples, the transaction end indication may be carried in an SLPP message that does not have the SLPP message body. In this example, the SLPP message carrying the first indication information may be understood as a dedicated SLPP message or a specific SLPP message for indicating the end of the transaction.

For example, after the last SLPP message carrying the message body of the first transaction is transmitted, the SLPP message carrying the transaction end indication is transmitted.

In embodiments of the present disclosure, the number of UEs involved in the first transaction is less than or equal to two. After receiving the SLPP message carrying the first indication information, the receiving end may directly end the first transaction according to the first indication information.

In embodiments of the present disclosure, some or all of the steps, optional implementations thereof, may be arbitrarily combined with some or all of the steps in other embodiments, and may be arbitrarily combined with optional implementations of other embodiments.

FIG. 10 is a flow chart of an information processing method illustrated according to an illustrative embodiment. As illustrated in FIG. 10, the method is performed by a receiving end and may include the following step.

In step 1001: an SLPP message carrying second indication information transmitted by the transmitting end is received, in which the second indication information indicates that the SLPP message carrying the second indication information is a last message of the transmitting end within the first transaction or a last message carrying an SLPP message body of the transmitting end within the first transaction. The participant of the first transaction is a UE group, and the transmitting end is a UE within the UE group

In some examples, the second indication information may be carried in a message header or a message body of the SLPP message.

For example, when the second indication information and the transaction content are simultaneously carried in the message body of the SLPP message, the message body further includes a distinguishing flag, and the distinguishing flag is used to distinguish the second indication information and the transaction content in the message body.

In some examples, the second indication information may be a transaction end indication.

For example, the transaction end indication is indicated as an end tag, and the transaction end indication may be "end session"; or the transaction end indication is a sequence of bits indicating the end.

When the SLPP message transmitted by the transmitting end in the first transaction carries the message body, it may carry the transaction end indication, thus there is no need to construct a special message carrying the transaction end indication in addition to the SLPP message carrying the message body, so that the SLPP message may be multiplexed and the implementation is simple.

In some examples, the transaction end indication may be carried in an SLPP message that does not have the SLPP message body. In this example, the SLPP message carrying the second indication information may be understood as a dedicated SLPP message or a specific SLPP message.

For example, after the last SLPP message carrying the message body of the first transaction is transmitted within the first transaction, the transmitting end transmits the SLPP message carrying the transaction end indication.

In some examples, the receiving end may receive the SLPP message carrying the second indication information in a unicast, groupcast, or broadcast manner.

In the present embodiment, in a case where the receiving end is the initiator of the first transaction, after receiving the SLPP message carrying the second indication information, the receiving end may determine, according to the second indication information carried by the SLPP message, that the SLPP message is a last message transmitted by the transmitting end within the first transaction or a last message carrying an SLPP message body transmitted by the transmitting end within the first transaction. In this way, it is beneficial to improving the accuracy of determining the end of the transaction between the initiator and a plurality of participants of the same transaction.

In embodiments of the present disclosure, some or all of the steps, optional implementations thereof, may be arbitrarily combined with some or all of the steps in other embodiments, and may be arbitrarily combined with optional implementations of other embodiments.

FIG. 11 is a flow chart of an information processing method illustrated according to an illustrative embodiment. As illustrated in FIG. 11, the method is performed by the receiving end and may include the following step.

In step 1101: in response to receiving an SLPP message carrying third indication information, it is determined to end the first transaction or it is determined that the SLPP message carrying the third indication information is a last message carrying an SLPP message body of the transmitting end of the first transaction. The participant of the first transaction is the UE group, and the receiving end is the UE within the UE group.

In some examples, for the relevant description of the third indication information and the like reference may be made to the related description of the third indication information and the like in the embodiments described above, which is not repeatedly described here.

In some examples, the receiving end may receive the SLPP message carrying the third indication information in a unicast or groupcast or broadcast manner.

In the present embodiment, by receiving the SLPP message carrying the third indication information transmitted by the initiator of the first transaction, after the participant of the first transaction confirms the end of the first transaction, or confirms that the SLPP message carrying the third indication information is the last SLPP message of the first transaction carrying the SLPP message body according to the third indication information, the participant of the first transaction no longer expects to receive any SLPP message related to the first transaction or any SLPP message carrying the SLPP message body related to the first transaction. That is, when the participant of the first transaction receives an SLPP message of any transaction having the same transaction ID as the first transaction, or an SLPP message carrying an SLPP message body of any transaction having the same transaction ID as the first transaction, the SLPP will be treated as an SLPP message of a new transaction.

In the present embodiment, since the same transaction involves a plurality of different participants, by means of the SLPP message carrying the third indication information transmitted by the initiator of the first transaction, the participant of the first transaction may determine the end of the first transaction according to the third indication information, which is beneficial to improving the accuracy of determining the end of the transaction between the initiator and the plurality of participants of the same transaction.

In embodiments of the present disclosure, some or all of the steps, optional implementations thereof, may be arbitrarily combined with some or all of the steps in other embodiments, and may be arbitrarily combined with optional implementations of other embodiments.

FIG. 12 is a flow chart of an information processing method illustrated according to an illustrative embodiment. As illustrated in FIG. 12, the method is performed by a receiving end and may include the following step.

In step 1201: in response to receiving an SLPP message carrying fourth indication information, it is determined to end the first transaction, in which the SLPP message carrying the fourth indication information is transmitted by all other UEs involved in the first transaction except the receiving end. The participant of the first transaction is a UE group.

In some examples, for the relevant description of the fourth indication information and the like reference may be made to the related description of the fourth indication information and the like in the embodiments described above, which is not repeatedly described here.

In some examples, the receiving end may receive the SLPP message carrying the fourth indication information in a unicast or groupcast or broadcast manner.

In the present embodiment, in a case where a participant of the first transaction is a UE group, the transmitting end is any UE involved in the first transaction, when receiving the SLPP message carrying the fourth indication information, the receiving end may confirm that the SLPP message is the last message of the transmitting end within the first transaction or a last message carrying an SLPP message body of the transmitting end within the first transaction. In this way, it is beneficial to improving the accuracy of determining the end of the transaction between the initiator and a plurality of participants of the same transaction.

In embodiments of the present disclosure, some or all of the steps, optional implementations thereof, may be arbitrarily combined with some or all of the steps in other embodiments, and may be arbitrarily combined with optional implementations of other embodiments.

It should be noted that those skilled in the art may understand that the methods provided in the embodiments of the present disclosure may be performed alone or together with some methods in the embodiments of the present disclosure or some methods in related art.

To further explain any embodiments of the present disclosure, several specific embodiments are provided below.

Embodiments of the present disclosure provide an information processing method, and the method may include:
a first UE (e.g., UE A) transmitting an SLPP message, and the SLPP message carrying a transaction ID, and the transaction ID including at least the UE ID of an initiator of the transaction.

In some embodiments, the transaction ID may further include a transaction number.

In some examples, SLPP messages within the same transaction take the same transaction number.

In some examples, the transaction ID is carried in the SPP message only when the SLPP message contains an SLPP message body (e.g., slpp-MessageBody) in the SLPP message.

In some examples, if the transaction involves only two UEs, the UE ID of the initiator may be indicated by a UE type, such as a server UE, or a client UE.

In some examples, if the initiator of the transaction is a server UE, the UE ID may be indicated by the UE type, i.e., the server UE.

In some examples, the first SLPP message received by the UE carrying a certain transaction ID triggers the establishment of the transaction.

In some embodiments, the UE ID of the initiator of the transaction may be a source layer 2 ID, a destination layer 2 ID, an application layer ID, or an SLPP UE ID of the initiator.

In some embodiments, the transaction ID further includes a UE ID of a participant of the transaction.

In some examples, in a case where the transaction participant is one UE, the UE ID of the participant of the transaction may be a source layer 2 ID, a destination layer 2 ID, an application layer ID, or an SLPP UE ID of the participant.

In some examples, in a case where the transaction participant is a UE group, the UE ID of the participant of the transaction may be a source/destination layer 2 groupcast ID, an application layer group ID, or an SLPP group ID of the participant.

In some examples, the source/destination layer 2 groupcast ID, or application layer group ID, is provided by the application layer of an initiator of the session, and is provided to a participant of the session through a message for establishment of the session. The SLPP UE group ID may be created by the initiator of the session and provided to the participant of the session through a message for establishment of the session.

In some examples, in a case where the transaction participant is a UE group, the UE ID of the participant of the transaction may be a source/destination layer 2 ID list of each participant, an application layer ID list of each participant, or an SLPP UE ID list of each participant.

In some examples, when the transaction is created using the broadcast mode, the UE ID of the participant of the transaction may be a source/destination layer 2 broadcast ID or an SLPP broadcast ID.

In some examples, the source/destination layer 2 broadcast ID is provided by the application layer of an initiator of the session, and is provided to a participant of the session through a message for establishment of the session. The SLPP broadcast ID may be created by the initiator of the session and provided to the participant of the session through a message for establishment of the session.

In some examples, the UE ID of the participant is carried in the transaction ID only when the participant of the transaction is one UE or a UE group.

In some examples, the transaction is created using a broadcast mode, and the transaction ID does not carry the UE ID of the participant.

In some embodiments, transaction IDs need to be different between parallel transactions within the same session.

In some examples, after the transaction ends, the transaction ID may continue to be used to create a new transaction within the session.

In some examples, the transaction ID needs to be different, which includes at least one of an initiator of the transaction or a transaction number being different.

In some examples, the transaction ID needs to be different, which includes at least one of an initiator of the transaction, a participant, or a transaction number being different.

In some embodiments, in a case where the SLPP transaction involves only two UEs, and the SLPP message to be transmitted by the UE is the last message of a transaction, or the last message carrying the SLPP message body, the UE adds an end transaction indication (e.g., end transaction) to the SLPP message.

In some embodiments, in a case where the SLPP transaction involves a UE group, the participating UE of the transaction adds indication information (e.g., end transaction) to the SLPP message to indicate that the currently transmitted SLPP message is the last message of the UE in the transaction, or the last message carrying the SLPP message body of the UE in the transaction.

In some examples, the SLPP message carrying the end transaction may be transmitted using unicast or groupcast or broadcast.

In some examples, the initiating UE of the transaction determines to end the transaction and transmits an SLPP message carrying end transaction to other UEs within the transaction.

In some examples, when the initiating UE transmits an SLPP message carrying the end transaction, the SLPP message may have no SLPP packet body (i.e., message body).

In some examples, determining to end the transaction includes determining to end the transaction based on an end transaction indication transmitted by the participating UE of the transaction.

In some examples, the SLPP message carrying the end transaction may be transmitted using unicast or groupcast or broadcast.

In some examples, after receiving the SLPP message carrying the end transaction transmitted by the initiating UE of the transaction, other UEs within the SLPP transaction confirm that the transaction is ended or confirm that it is the last message carrying the SLPP packet body of the transaction.

In this example, after confirming the end of the transaction, or confirming that it is the last message of the transaction carrying the SLPP packet body, the UE no longer expects to receive any SLPP message of the transaction or any SLPP message carrying the SLPP packet body of the transaction. That is, any SLPP message having the same transaction ID, or any SLPP message carrying an SLPP packet body and having the same transaction ID received by the UE will be treated as an SLPP message of a new SLPP transaction.

In some examples, after one UE within a transaction receives the SLPP message carrying the end transaction transmitted by all other UEs within the transaction, the one UE confirms that the transaction is ended or confirms that it is the last message carrying the SLPP packet body of the transaction.

In this example, after confirming the end of the transaction, or confirming that it is the last message of the transaction carrying the SLPP packet body, the UE no longer expects to receive any SLPP message of the transaction or any SLPP message carrying the SLPP packet body of the transaction. That is, any SLPP message having the same transaction ID, or any SLPP message carrying an SLPP packet body and having the same transaction ID received by the UE will be treated as an SLPP message of a new SLPP transaction.

In embodiments of the present disclosure, some or all of the steps, optional implementations thereof, may be arbitrarily combined with some or all of the steps in other embodiments, and may be arbitrarily combined with optional implementations of other embodiments.

It should be noted that those skilled in the art may understand that the information processing methods provided in the embodiments of the present disclosure may be performed alone or together with some methods in the embodiments of the present disclosure or some methods in related art.

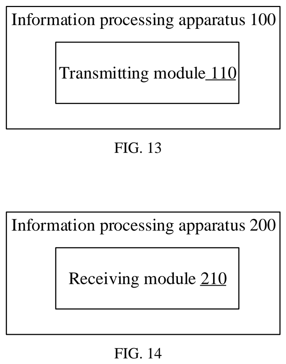

FIG. 13 is a block diagram of an information processing apparatus illustrated according to an illustrative embodiment. As illustrated in FIG. 13, the information processing apparatus 100 includes:
a transmitting module 110 configured to transmit an SLPP message, in which the SLPP message includes a transaction identification (ID) of a first transaction, and the transaction ID is used to determine an initiator of the first transaction.

In some embodiments, the transaction ID includes:
a first ID used for indicating the initiator of the first transaction.

In some embodiments, the first ID includes at least one of:
a source layer 2 ID of the initiator;
a destination layer 2 ID of the initiator;
an application layer ID of the initiator; or
an SLPP user equipment (UE) ID of the initiator.

In some embodiments, the transaction ID further includes:
a second ID used for indicating a participant of the first transaction.

In some embodiments, the participant is one UE, and the second ID includes at least one of:
a source layer 2 ID of the participant;
a destination layer 2 ID of the participant;
an application layer ID of the participant; or
an SLPP UE ID of the participant.

In some embodiments, the participant is a UE group, and the second ID includes at least one of:
a group ID of the UE group;
a source layer 2 groupcast ID of the UE group;
a destination layer 2 groupcast ID of the UE group;
an application layer group ID of the UE group; or
an SLPP UE group ID of the UE group.

In some embodiments, the participant is a UE group, and the second ID includes at least one of:
a source layer 2 ID list of the participant;
a destination layer 2 ID list of the participant;
an application layer ID list of the participant; or
an SLPP UE ID list of the participant.

In some embodiments, the first transaction is created using a broadcast mode, and the second ID includes at least one of: a source layer 2 broadcast ID, a destination layer 2 broadcast ID, or an SLPP broadcast ID of the participant;
or the participant of the first transaction is one UE or a UE group, and the transaction ID includes the second ID;
or the first transaction is created using a broadcast mode, and the transaction ID does not include the second ID.

In some embodiments, the transaction ID of the first transaction is different from a transaction ID of a second transaction, and the first transaction and the second transaction are parallel transactions within the same session.

In some embodiments, the initiator of the first transaction is different from an initiator of the second transaction;
and/or a participant of the first transaction is different from a participant of the second transaction;
and/or the transaction ID includes a transaction number, and the transaction number of the first transaction is different from a transaction number of the second transaction.

In some embodiments, the number of UEs involved in the first transaction is less than or equal to two, and the transmitting module 110 is configured to:
transmit an SLPP message carrying first indication information, in which the first indication information is used for ending the first transaction; and
in which the SLPP message carrying the first indication information includes one of:
   a last SLPP message involved in the first transaction; or
   a last SLPP message carrying an SLPP message body involved in the first transaction.

In some embodiments, a participant of the first transaction is a UE group, the transmitting end is a UE within the UE group, and the transmitting module 110 is configured to:
transmit an SLPP message carrying second indication information, in which the second indication information indicates that the SLPP message carrying the second indication information is a last message of the transmitting end within the first transaction or a last message carrying an SLPP message body of the transmitting end within the first transaction.

In some embodiments, a participant of the first transaction is a UE group, the transmitting end is the initiator of the first transaction, and the transmitting module 110 is configured to:
in response to determining to end the first transaction, transmit an SLPP message carrying third indication information, in which the first indication information is used for ending the first transaction.

In some embodiments, a participant of the first transaction is a UE group, the transmitting end is any UE involved in the first transaction, and the transmitting module 110 is configured to transmit an SLPP message carrying fourth indication information, in which the fourth indication information indicates that the SLPP message carrying the fourth indication information is a last message of the transmitting end within the first transaction or a last message carrying an SLPP message body of the transmitting end within the first transaction. With regard to the information processing method in above embodiments, the specific manner in which each module performs an operation is described in detail in the embodiments relating to the information processing method performed by the transmitting end, and will not be described in detail here.

FIG. 14 is a block diagram of an information processing apparatus illustrated according to an illustrative embodiment. As illustrated in FIG. 14, the information processing apparatus 200 includes:
a receiving module 210 configured to receive a sidelink positioning protocol (SLPP) message; in which the SLPP message includes a transaction identification (ID) of a first transaction, and the transaction ID is used to determine an initiator of the first transaction.

In some embodiments, the transaction ID includes:
a first ID used for indicating the initiator of the first transaction.

In some embodiments, the first ID includes at least one of:
a source layer 2 ID of the initiator;
a destination layer 2 ID of the initiator;
an application layer ID of the initiator; or
an SLPP user equipment (UE) ID of the initiator.

In some embodiments, the transaction ID further includes:
a second ID used for indicating a participant of the first transaction.

In some embodiments, the participant is one UE, and the second ID includes at least one of:
a source layer 2 ID of the participant;
a destination layer 2 ID of the participant;
an application layer ID of the participant; or
an SLPP UE ID of the participant.

In some embodiments, the participant is a UE group, and the second ID includes at least one of:
a group ID of the UE group;
a source layer 2 groupcast ID of the UE group;
a destination layer 2 groupcast ID of the UE group;
an application layer group ID of the UE group; or
an SLPP UE group ID of the UE group.

In some embodiments, the participant is a UE group, and the second ID includes at least one of:
a source layer 2 ID list of the participant;
a destination layer 2 ID list of the participant;
an application layer ID list of the participant; or
an SLPP UE ID list of the participant.

In some embodiments, the first transaction is created using a broadcast mode, and the second ID includes at least one of: a source layer 2 broadcast ID, a destination layer 2 broadcast ID, or an SLPP broadcast ID of the participant;
or the participant of the first transaction is one UE or a UE group, and the transaction ID includes the second ID;
or the first transaction is created using a broadcast mode, and the transaction ID does not include the second ID.

In some embodiments, the transaction ID of the first transaction is different from a transaction ID of a second transaction, and the first transaction and the second transaction are parallel transactions within the same session.

In some embodiments, the initiator of the first transaction is different from an initiator of the second transaction;
and/or a participant of the first transaction is different from a participant of the second transaction;
and/or the transaction ID includes a transaction number, and the transaction number of the first transaction is different from a transaction number of the second transaction.

In some embodiments, the number of UEs involved in the first transaction is less than or equal to two, and the receiving module 210 is configured to:
receive an SLPP message carrying first indication information, in which the first indication information is used for ending the first transaction; and
in which the SLPP message carrying the first indication information includes one of:
a last SLPP message involved in the first transaction; or
a last SLPP message carrying an SLPP message body involved in the first transaction.

In some embodiments, a participant of the first transaction is a UE group, the receiving end is the initiator of the first transaction, and the receiving module 210 is configured to:
receive an SLPP message carrying second indication information transmitted by the transmitting end, in which the second indication information indicates that the SLPP message carrying the second indication information is a last message of the transmitting end within the first transaction or a last message carrying an SLPP message body of the transmitting end within the first transaction.

In some embodiments, a participant of the first transaction is a UE group, the receiving end is a UE within the UE group, and the apparatus further includes:
a first determining module configured to, in response to receiving an SLPP message carrying third indication information, determine to end the first transaction or determine that the SLPP message carrying the third indication information is a last message carrying an SLPP message body of the transmitting end of the first transaction.

In some embodiments, the participant of the first transaction is the UE group, and the apparatus further includes:
a first determining module, configured to, in response to receiving an SLPP message carrying fourth indication information, determine to end the first transaction, in which the SLPP message carrying the fourth indication information is transmitted by all other UEs involved in the first transaction except the receiving end.

With regard to the device in above embodiments, the specific manner in which each module performs an operation is described in detail in the embodiments relating to the method, and will not be described in detail herein.

Embodiments of the present disclosure provide a communication device including:
a memory configured to store instructions executable by the processor, and
a processor connected to the memory,
in which the processor is configured to perform the information processing method provided by any technical solution described above.

The processor may include various types of storage media that are non-transitory computer storage media capable of continuing to memorize the information stored thereon after the communication device is powered down.

Here, the communication device includes: a UE.

The processor may be connected to the memory via a bus or the like for reading the executable program stored on the memory, e.g., to implement the information processing method provided by any one of the foregoing embodiments.

Embodiments of the present disclosure provide a computer storage medium storing an executable program that when executed by a processor, causes the information processing method provided by any one of the foregoing technical solutions to be implemented.

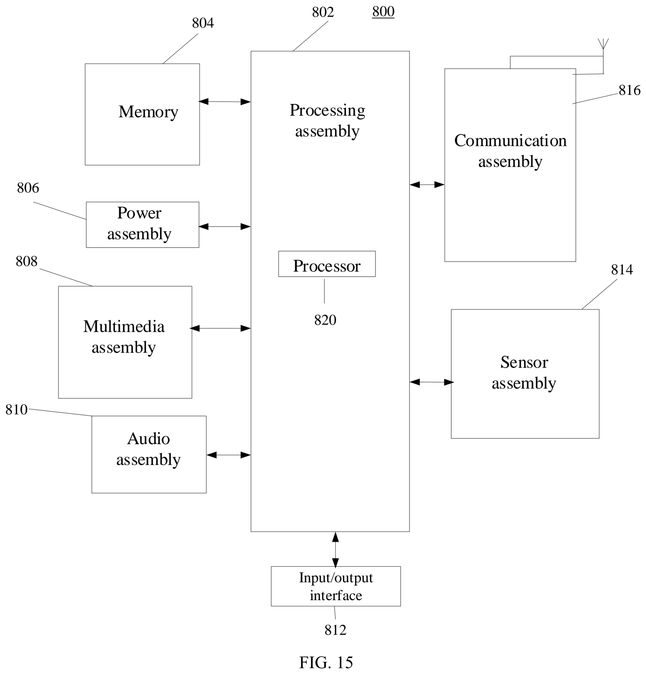

FIG. 15 is a block diagram of a terminal 800 illustrated according to an illustrative embodiment. For example, the terminal 800 may be a mobile phone, a computer, a digital broadcast terminal, a messaging device, a game console, a tablet device, a medical device, a fitness device, a personal digital assistant, etc.

As illustrated in FIG. 15, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls overall operation of the terminal 800, such as operations related to display, call, data communication, camera and record. The processing component 802 may include one or more of processors 820 to execute instructions, so as to generate all or a part of steps of the above-described method. Additionally, the processing component 802 may include one or more of modules, facilitating interaction between the processing component 802 and other components. For example, the processing component 802 may include a multimedia module, facilitating interaction between the multimedia component 808 and the processing component 802.

The memory 804 is configured to store various types of data to support the operations of the terminal 800. Examples of these data include instructions, contact data, telephone book data, messages, pictures, videos, etc. for any application or method operated on the terminal 800. The memory 804 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power component 806 provides power for various components of the terminal 800. The power component 806 may include a power management system, one or more of power sources, and other components associated with generating, managing and distributing power for the terminal 800.

The multimedia component 808 includes a screen providing one output interface between the terminal 800 and the user. In some embodiments, the screen may include a liquid crystal display (LCD), and a touch panel (TP). If the screen includes the touch panel, the screen may be realized as a touch screen, so as to receive an input signal from the user. The touch panel includes one or more of touch sensors to sense touch, swipe and gesture on the touch panel. The touch sensor not only can sense the boundary of the touch or swipe action, but also can detect duration time and pressure related to the touch or swipe operation. In in some embodiments, the multimedia component 808 includes a front camera and/or a rear camera. When the terminal 800 is in an operation mode, such as in a photographing or video mode, the front camera and/or the rear camera can receive external multimedia data. Each of the front camera and the rear camera may be a fixed optical lens system or has a focal length and optical zoom capability.

The audio component 810 is configured to output and/or input an audio signal. For example, the audio component 810 includes a microphone (MIC). The microphone is configured to receive external audio signal when the terminal 800 is in the operation mode, such as in a call mode, a record mode and a speech recognition mode. The received audio signal may be further stored in the memory 804 or transmitted via the communication component 816. In some embodiments, the audio component 810 further includes a speaker configured to output the audio signal.

The input/output (I/O) interface 812 provides interfaces between the processing component 802 and peripheral interface modules, and the forgoing peripheral interface module may be a keyboard, a click wheel, a button, etc. The button may include but not limited to a homepage button, a volume button, a start button and a lock button.

The sensor component 814 includes one or more of sensors configured to provide state assessments of various aspects of the terminal 800. For example, the sensor component 814 may detect on/off state of the terminal 800, relative positioning of components. For example, the components may be a display and a keypad of the terminal 800. The sensor component 814 may further detect positional variation of the terminal 800 or one component of the terminal 800, presence or absence of contact between the user and the terminal 800, orientation or acceleration/deceleration of the terminal 800 and temperature variation of the terminal 800. The sensor component 814 may include a proximity sensor configured to detect presence of nearby objects without any physical contact. The sensor component 814 may also include an optical sensor, such as a COMS or CCD image sensor configured to use in an imaging application. In some embodiments, the sensor component 814 may further include an acceleration sensor, a gyro sensor, a magnetic sensor, a pressure sensor or a temperature sensor.

The communication component 816 is configured to facilitate wired or wireless communication between the terminal 800 and other devices. The terminal 800 may access to wireless network based on communication standard, such as WiFi, 4G, or 5G, or combination thereof. In an illustrative embodiment, the communication component 816 receives a broadcast signal or information related to the broadcast from an external broadcast management system. In an illustrative embodiment, the communication component 816 further includes a near field communication (NFC) module to facilitate short-range communication. For example, the NFC module may be realized based on a radio frequency identification (RFID) technology, an infra-red data association (IrDA) technology, an ultra-wide band (UWB) technology, a Bluetooth (BT) technology and other technologies.

In an illustrative embodiment, the terminal 800 may be realized by one or more of application specific integrated circuits (ASIC), digital signal processors (DSP), digital signal processing equipments (DSPD), programmable logic devices (PLD), field-programmable gate arrays (FPGA), controllers, microcontrollers, microprocessors or other electronic elements configured to execute the above-described method.

In illustrative embodiments, there is also provided a non-transitory computer-readable storage medium including instructions, such as a memory 804 including instructions, and the instructions is executable by the processor 820 of the terminal 800 to generate the method described above. For example, the non-transitory computer readable storage medium may be ROM, random access memory (RAM), CD-ROM, magnetic tape, floppy disks, and optical data storage devices, among others.

In the absence of contradictions, each step in a certain embodiment or implementation may be implemented as an independent embodiment, and the steps may be arbitrarily combined, for example, a solution in which some steps are removed in a certain embodiment or implementation can also be implemented as an independent embodiment, and the order of each step in a certain embodiment or implementation may be arbitrarily exchanged, and in addition, optional manners or examples in a certain embodiment or implementation may be arbitrarily combined. In addition, various embodiments or implementations may be arbitrarily combined, for example, some or all steps of different embodiments or implementations may be arbitrarily combined, and one embodiment or implementation may be arbitrarily combined with optional manners or examples of other embodiments or implementations.

Other embodiments of the present disclosure will readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as illustrative only, with the true scope and spirit of the present disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. An information processing method, performed by a transmitting end, comprising:
transmitting a sidelink positioning protocol (SLPP) message; wherein the SLPP message comprises a transaction identification (ID) of a first transaction, and the transaction ID is used to determine an initiator of the first transaction.

2. The method according to claim 1, wherein the transaction ID comprises:
a first ID used for indicating the initiator of the first transaction.

3. The method according to claim 2, wherein the first ID comprises at least one of:
a source layer 2 ID of the initiator;
a destination layer 2 ID of the initiator;
an application layer ID of the initiator; or
an SLPP user equipment (UE) ID of the initiator.

4. The method according to any one of claims 1 to 3, wherein the transaction ID further comprises:
a second ID used for indicating a participant of the first transaction.

5. The method according to claim 4, wherein the participant is one UE, and the second ID comprises at least one of:
a source layer 2 ID of the participant;
a destination layer 2 ID of the participant;
an application layer ID of the participant; or
an SLPP UE ID of the participant.

6. The method according to claim 4, wherein the participant is a UE group, and the second ID comprises at least one of:
a group ID of the UE group;
a source layer 2 groupcast ID of the UE group;
a destination layer 2 groupcast ID of the UE group;
an application layer group ID of the UE group; or
an SLPP UE group ID of the UE group.

7. The method according to claim 4, wherein the participant is a UE group, and the second ID comprises at least one of:
a source layer 2 ID list of the participant;
a destination layer 2 ID list of the participant;
an application layer ID list of the participant; or
an SLPP UE ID list of the participant.

8. The method according to claim 4, wherein:
the first transaction is created using a broadcast mode, and the second ID comprises at least one of: a source layer 2 broadcast ID, a destination layer 2 broadcast ID, or an SLPP broadcast ID of the participant;
or
the participant of the first transaction is one UE or a UE group, and the transaction ID comprises the second ID;
or
the first transaction is created using a broadcast mode, and the transaction ID does not comprise the second ID.

9. The method according to any one of claims 1 to 8, wherein the transaction ID of the first transaction is different from a transaction ID of a second transaction, and the first transaction and the second transaction are parallel transactions within the same session.

10. The method according to claim 9, wherein:
the initiator of the first transaction is different from an initiator of the second transaction;
and/or
a participant of the first transaction is different from a participant of the second transaction;
and/or
the transaction ID comprises a transaction number, and the transaction number of the first transaction is different from a transaction number of the second transaction.

11. The method according to any one of claims 1 to 10, wherein a number of UEs involved in the first transaction is less than or equal to two, and the method further comprises:
transmitting an SLPP message carrying first indication information, wherein the first indication information is used for ending the first transaction; and
wherein the SLPP message carrying the first indication information comprises one of:
a last SLPP message involved in the first transaction; or
a last SLPP message carrying an SLPP message body involved in the first transaction.

12. The method according to any one of claims 1 to 10, wherein a participant of the first transaction is a UE group, the transmitting end is a UE within the UE group, and the method further comprises:
transmitting an SLPP message carrying second indication information, wherein the second indication information indicates that the SLPP message carrying the second indication information is a last message of the transmitting end within the first transaction or a last message carrying an SLPP message body of the transmitting end within the first transaction.

13. The method according to any one of claims 1 to 10, wherein a participant of the first transaction is a UE group, the transmitting end is the initiator of the first transaction, and the method further comprises:
in response to determining to end the first transaction, transmitting an SLPP message carrying third indication information, wherein the third indication information is used for ending the first transaction.

14. The method according to any one of claims 1 to 10, wherein a participant of the first transaction is a UE group, the transmitting end is any UE involved in the first transaction, and the method further comprises: transmitting an SLPP message carrying fourth indication information, wherein the fourth indication information indicates that the SLPP message carrying the fourth indication information is a last message of the transmitting end within the first transaction or a last message carrying an SLPP message body of the transmitting end within the first transaction.

15. An information processing method, performed by a receiving end, comprising:
receiving a sidelink positioning protocol (SLPP) message; wherein the SLPP message comprises a transaction identification (ID) of a first transaction, and the transaction ID is used to determine an initiator of the first transaction.

16. The method according to claim 15, wherein the transaction ID comprises:
a first ID used for indicating the initiator of the first transaction.

17. The method according to claim 16, wherein the first ID comprises at least one of:
a source layer 2 ID of the initiator;
a destination layer 2 ID of the initiator;
an application layer ID of the initiator; or
an SLPP user equipment (UE) ID of the initiator.

18. The method according to any one of claims 15 to 17, wherein the transaction ID further comprises:
a second ID used for indicating a participant of the first transaction.

19. The method according to claim 18, wherein the participant is one UE, and the second ID comprises at least one of:
a source layer 2 ID of the participant;
a destination layer 2 ID of the participant;
an application layer ID of the participant; or
an SLPP UE ID of the participant.

20. The method according to claim 18, wherein the participant is a UE group, and the second ID comprises at least one of:
a group ID of the UE group;
a source layer 2 groupcast ID of the UE group;
a destination layer 2 groupcast ID of the UE group;
an application layer group ID of the UE group; or
an SLPP UE group ID of the UE group.

21. The method according to claim 18, wherein the participant is a UE group, and the second ID comprises at least one of:
a source layer 2 ID list of the participant;
a destination layer 2 ID list of the participant;
an application layer ID list of the participant; or
an SLPP UE ID list of the participant.

22. The method according to claim 18, wherein:
the first transaction is created using a broadcast mode, and the second ID comprises at least one of: a source layer 2 broadcast ID, a destination layer 2 broadcast ID, and an SLPP broadcast ID of the participant;
or
the participant of the first transaction is one UE or a UE group, and the transaction ID comprises the second ID;
or
the first transaction is created using a broadcast mode, and the transaction ID does not comprise the second ID.

23. The method according to any one of claims 15 to 22, wherein the transaction ID of the first transaction is different from a transaction ID of a second transaction, and the first transaction and the second transaction are parallel transactions within the same session.

24. The method according to claim 23, wherein:
the initiator of the first transaction is different from an initiator of the second transaction;
and/or
a participant of the first transaction is different from a participant of the second transaction;
and/or
the transaction ID comprises a transaction number, and the transaction number of the first transaction is different from a transaction number of the second transaction.

25. The method according to any one of claims 15 to 24, wherein a number of UEs involved in the first transaction is less than or equal to two, and the method further comprises:
receiving an SLPP message carrying first indication information, wherein the first indication information is used for ending the first transaction; and
wherein the SLPP message carrying the first indication information comprises one of:
a last SLPP message involved in the first transaction; or
a last SLPP message carrying an SLPP message body involved in the first transaction.

26. The method according to any one of claims 15 to 24, wherein a participant of the first transaction is a UE group, the receiving end is the initiator of the first transaction, and the method further comprises:
receiving an SLPP message carrying second indication information transmitted by the transmitting end, wherein the second indication information indicates that the SLPP message carrying the second indication information is a last message of the transmitting end within the first transaction or a last message carrying an SLPP message body of the transmitting end within the first transaction.

27. The method according to any one of claims 15 to 24, wherein a participant of the first transaction is a UE group, the receiving end is a UE within the UE group, and the method further comprises:
in response to receiving an SLPP message carrying third indication information, determining to end the first transaction or determining that the SLPP message carrying the third indication information is a last message carrying an SLPP message body of the transmitting end of the first transaction.

28. The method according to any one of claims 15 to 24, wherein a participant of the first transaction is a UE group, and the method further comprises:
in response to receiving an SLPP message carrying fourth indication information, determining to end the first transaction, wherein the SLPP message carrying the fourth indication information is transmitted by all other UEs involved in the first transaction except the receiving end.

29. An information processing apparatus, comprising:
a transmitting module configured to transmit a sidelink positioning protocol (SLPP) message; wherein the SLPP message comprises a transaction identification (ID) of a first transaction, and the transaction ID is used to determine an initiator of the first transaction.

30. An information processing apparatus, comprising:
a receiving module configured to receive a sidelink positioning protocol (SLPP) message; wherein the SLPP message comprises a transaction identification (ID) of a first transaction, and the transaction ID is used to determine an initiator of the first transaction.

31. A communication device, comprising: a processor, a transceiver, a memory and an executable program stored in the memory and executable by the processor, wherein the processor, when running the executable program, performs the information processing method according to any one of claims 1 to 14 or 15 to 28.

32. A computer storage medium storing an executable program that when run by a processor, causes the information processing method according to any one of claims 1 to 14 or 15 to 28 to be implemented.
